# EUROPÄISCHE PATENTSCHRIFT

(11) **EP 2 114 599 B1**
(45) Veröffentlichungstag und Bekanntmachung des Hinweises auf die Patenterteilung: **16.01.2013**
(21) Anmeldenummer: 08701560.8
(22) Anmeldetag: 17.01.2008
(51) Int. Cl.: B23B 29/034

(54) **AUSGEWUCHTETES AUSBOHRWERKZEUG MIT KLEMMEINRICHTUNG**
COUNTERBALANCED BORING TOOL WITH CLAMPING DEVICE
OUTIL D'ALÉSAGE ÉQUILIBRÉ COMPRENANT UN MÉCANISME DE SERRAGE

(30) Priorität: 29.01.2007 DE 102007004383
(43) Veröffentlichungstag der Anmeldung: 11.11.2009
(73) Patentinhaber: Sandvik Intellectual Property AB, 811 81 Sandviken (SE)
(72) Erfinder: FRANK, Peter, 98593 Floh-Seligenthal (DE); NEUMANN, Jens, 98590 Wernshausen (DE)
(74) Vertreter: WSL Patentanwälte Partnerschaftsgesellschaft
(86) Internationale Anmeldenummer: PCT/EP2008/050526
(87) Internationale Veröffentlichungsnummer: WO 2008/092752

(56) Entgegenhaltungen:
- EP-A- 0 791 421
- EP-A- 0 804 984
- DE-A1- 3 936 243
- JP-A- 9 155 606
- JP-A- 9 309 010
- JP-A- 10 291 103

## Beschreibung

Die vorliegende Erfindung betrifft ein Ausbohrwerkzeug mit einem Werkzeuggrundkörper, an dessen Stirnseite mindestens ein, relativ zum Werkzeuggrundkörper einstellbarer Werkzeugträger vorgesehen ist, wobei der Werkzeugträger in radialer Richtung bewegbar und festspannbar ist.

Solche Ausbohrwerkzeuge werden häufig mit sehr hohen Drehzahlen betrieben, so daß es notwendig ist, das Ausbohrwerkzeug vor dem Betrieb auszuwuchten. Da jede radiale Verstellung des Werkzeugträgers für eine Unwucht sorgt, muß nach jeder solchen Verstellung das Werkzeug neu ausgewuchtet werden. Daher sind bereits Ausbohrwerkzeuge bekannt, die ein Gegengewicht aufweisen, welches mit dem Werkzeugträger derart gekoppelt ist, daß bei einer Bewegung des Werkzeugträgers in eine Richtung eine Bewegung des Gegengewichts im wesentlichen in die entgegengesetzte Richtung erfolgt, wobei sowohl Werkzeugträger als auch Gegengewicht jeweils zumindest teilweise in einer Bohrung im Werkzeuggrundkörper angeordnet sind.

Ein solches Ausdrehwerkzeug ist beispielsweise bekannt aus der EP 0 804 984. Dieses Ausbohrwerkzeug weist ein Klemmorgan auf, das gleichzeitig mit Werkzeugträger und Gegengewicht in Kontakt treten soll. Diese Ausführungsform ist sehr aufwendig in der Herstellung. Zudem kann es im Laufe des Gebrauchs vorkommen, daß das Klemmorgan nicht mehr exakt gleichzeitig mit Gegengewicht einerseits und Werkzeugträger andererseits in Kontakt tritt, so daß es möglicherweise nach erfolgter Feinjustierung zu einer kleinen Unwucht kommt.

Ausgehend von diesem Stand der Technik ist es daher Aufgabe der Erfindung, ein Ausdrehwerkzeug der oben genannten Art bereitzustellen, das sich insbesondere für hohe Drehzahlen eignet, günstig herzustellen ist und zudem eine zuverlässige, präzise Auswuchtungsfunktion bereitstellt.

Diese Aufgabe wird dadurch gelöst, daß der Werkzeuggrundkörper eine Klemmeinrichtung aufweist, mit deren Hilfe der Werkzeuggrundkörper elastisch verformt werden kann, so daß sowohl Werkzeugträger als auch Gegengewicht jeweils in der Bohrung festgeklemmt werden.

Durch die elastische Verformung des Werkzeuggrundkörper kommt es zu einer Verspannung von Gegengewicht und Werkzeugträger in der Bohrung, so daß beide Teile umschließend festgeklemmt werden.

Um eine solche elastische Verformung zu ermöglichen, kann der Werkzeuggrundkörper beispielsweise einen Schlitz aufweisen, so daß durch die elastische Verformung mit Hilfe der Klemmeinrichtung der Schlitz schmaler wird.

Die Klemmeinrichtung kann beispielsweise aus einer Klemmschraube bestehen, die in eine Gewindebohrung im Werkzeuggrundkörper eingreift.

Besonders bevorzugt tritt die Klemmeinrichtung weder mit dem Werkzeugträger noch mit dem Gegengewicht in direkten Kontakt. Dadurch ist gewährleistet, daß Werkzeugträger und Gegengewicht durch die Verspannung des Werkzeuggrundkörpers und nicht durch Inkontakttreten mit der Klemmeinrichtung im Werkzeuggrundkörper verspannt werden.

Werkzeugträger und Gegengewicht sind in einer Ausführungsform in zwei getrennten, vorzugsweise im wesentlichen parallel zueinander verlaufenden Bohrungen angeordnet. Mit Vorteil sind Werkzeugträger und Gegengewicht über ein Verbindungselement miteinander verbunden.

Das Verbindungselement kann zumindest teilweise in dem Schlitz, der für die elastische Verformung des Werkzeuggrundkörpers vorgesehen ist, angeordnet sein.

Weiterhin sind in einer anderen Ausführungsform Werkzeugträger und Gegengewicht in derselben Bohrung im Werkzeuggrundkörper angeordnet.

In einer weiteren besonders bevorzugten Ausführungsform ist eine Führung zum Führen des Gegengewichts in der Bohrung vorgesehen. Diese dient dazu, die exakte Bewegung des Gegengewichts in der Bohrung zu gewährleisten. Die Führung kann beispielsweise aus einem Führungsbolzen bestehen, der innerhalb einer Bohrung in dem Gegengewicht angeordnet ist. Das Gegengewicht kann somit nur in axialer Richtung entlang des Führungsbolzens bewegt werden. Um eine Verdrehung des Gegengewichts um den Führungsbolzen zu verhindern, kann zusätzlich eine Führungsausnehmung und ein Führungsvorsprung, vorzugsweise eine Führungsnut und ein Führungsstift, vorgesehen sein. Zweckmäßigerweise ist die Führungsausnehmung an dem Gegengewicht für den Werkzeuggrundkörper, vorzugsweise am Gegengewicht, vorgesehen, und der Führungsvorsprung an dem anderen Element.

Alternativ dazu kann das Gegengewicht statt an einem Führungsbolzen auch in einer Führungshülse bzw. einer Führungsbohrung geführt werden.

Weiterhin ist für die Bewegung des Werkzeugträgers im Werkzeuggrundkörper ein Schraubelement mit zwei Gewinden (Doppelgewinde) vorgesehen, wobei das eine Gewinde mit dem Werkzeugträger und das andere Gewinde mit dem Gegengewicht in Eingriff steht.

Alternativ dazu kann zur Bewegung des Werkzeugträgers ein Schraubelement mit Doppelgewinde vorgesehen sein, wobei das eine Gewinde mit dem Werkzeugträger und das andere Gewinde mit dem Verbindungselement in Eingriff steht. Schließlich ist in einer dritten alternativen Ausführungsform vorgesehen, daß zur Bewegung des Werkzeugträgers ein Schraubelement mit Doppelgewinde vorgesehen ist, wobei das eine Gewinde mit dem Verbindungselement und das andere Gewinde mit dem Gegengewicht in Eingriff steht. Durch Drehen des Schraubelements kommt es somit zu einer entgegengerichteten Bewegung von Gegengewicht einerseits und Werkzeugträger andererseits. Da Gegengewicht und Werkzeugträger möglicherweise unterschiedliche Massen haben, können die beiden Gewinde auch eine unterschiedliche Steigung aufweisen, so daß sich bei einer kleinen Bewegung des schwereren Elements das leichtere Element entsprechend stärker in die entgegengesetzte Richtung bewegt.

Weiterhin ist in einer besonders bevorzugten Ausführungsform vorgesehen, daß Werkzeugträger und Gegengewicht aus Materialien unterschiedlicher Dichte bestehen, wobei vorzugsweise das Material des Gegengewichts eine höhere Dichte hat als das Material des Werkzeugträgers.

Mit Vorteil ist mindestens ein Gewinde vorzugsweise das mit dem Werkzeugträger in Eingriff tretende Gewinde als Feingewinde ausgebildet. Dadurch ist eine hochpräzise Auswuchtung möglich.

Weitere Vorteile, Merkmale und Anwendungsmöglichkeiten der vorliegenden Erfindung werden deutlich anhand der folgenden Beschreibung bevorzugter Ausführungsformen sowie der dazugehörigen Figuren. Es zeigen:
- Figur 1: eine Längsschnittansicht entlang der Linie A-A von Figur 2 einer ersten Ausführungsform eines erfindungsgemäßen Ausbohrwerkzeuges,
- Figur 2: eine Querschnittansicht entlang der Linie B-B von Figur 1,
- Figur 3: eine Draufsicht auf die erste Ausführungsform des erfindungsgemäßen Ausbohrwerkzeugs,
- Figur 4: eine Schnittansicht entlang der Linie E-E von Figur 3,
- Figur 5: eine Schnittansicht entlang der Linie D-D von Figur 3,
- Figur 6: eine Schnittansicht entlang der Linie C-C von Figur 3, die im wesentlichen Figur 2 entspricht,
- Figur 7: eine Längsschnittansicht einer zweiten Ausführungsform eines erfindungsgemäßen Ausbohrwerkzeugs,
- Figur 8: eine Schnittansicht entlang der Linie B-B von Figur 7,
- Figur 9: eine Schnittansicht entlang der Linie C-C von Figur 7,
- Figur 10: eine Schnittansicht entlang der Linie D-D von Figur 7,
- Figur 11: eine Längsschnittansicht einer dritten Ausführungsform des erfindungsgemäßen Bohrwerkzeugs,
- Figur 12: eine Schnittansicht entlang der Linie B-B von Figur 11 und
- Figur 13: eine Schnittansicht entlang der Linie C-C von Figur 11.

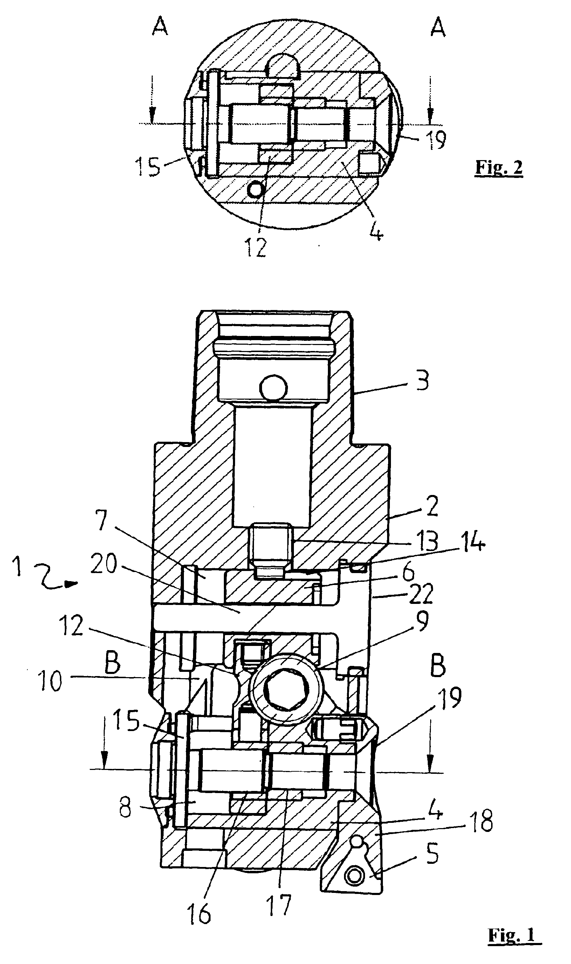

In Figur 1 ist ein Längsschnitt durch eine erste Ausführungsform des erfindungsgemäßen Ausbohrwerkzeugs 1 gezeigt. Das Ausbohrwerkzeug 1 besteht aus einem Werkzeuggrundkörper 2 mit einem Schaftteil 3, welches zum Anschluß des Ausbohrwerkzeugs an eine entsprechende Maschine vorgesehen ist. Das Ausbohrwerkzeug 1 weist des weiteren einen Werkzeugträger 4 auf, an dem mit Hilfe der Schraube 19 ein Schneidplattenhalter 18 mit einem Schneidplattensitz 5 angebracht ist. Der Werkzeugträger 4 weist eine Gewindebohrung auf und ist selbst innerhalb der Bohrung 8 angeordnet. Mit Hilfe des Schraubelements 15, das mit seinem Gewindegang 17 in die Gewindebohrung des Werkzeugträgers 4 eingreift, kann der Werkzeugträger in radialer Richtung, d.h. in Figur 1 nach rechts oder nach links, bewegt werden. Durch diese Maßnahme ist es möglich, den Bearbeitungsradius einer auf dem Schneidplattensitz 5 aufgenommenen Schneidplatte präzise einzustellen. Das Schraubelement kann auch mit einer Skalierscheibe verbunden sein oder eine Skalierung aufweisen.

Weiterhin ist im Werkzeuggrundkörper 2 eine weitere Bohrung 7 vorgesehen, in der sich ein Gegengewicht 6 befindet. Das Gegengewicht 6 weist eine Durchgangsbohrung auf, in die ein Führungsbolzen 20 mit der Abdeckung 22 eingreift. Dadurch ist sichergestellt, daß die Abdeckung 22 sicher am Werkzeug befestigt ist.

Um ein Verdrehen des Gegengewichts 6 um die Längsachse des Führungsbolzens 20 zu verhindern, weist das Gegengewicht eine Führungsnut 14 auf, in die ein im Grundkörper 2 angeordneter Führungsstift 13 eingreift. Mit dem Gegengewicht 6 verbunden ist ein Verbindungselement 12, das seinerseits ebenfalls eine Gewindebohrung aufweist, in die das Schraubelement 15 eingreift. Das Schraubelement 15 weist zwei unterschiedliche Gewinde 16 und 17 auf. Die beiden Gewinde sind gegenläufig, so daß beim Drehen der Schraube 15 der Werkzeugträger 4 samt Schneidplattenhalter 18 und der darin aufgenommenen Schneidplatte in die eine (radiale) Richtung bewegt wird, während das Verbindungselement 12 und das damit verbundene Gegengewicht 6 in die andere, entgegengesetzte (radiale) Richtung bewegt wird.

Dadurch kommt es zu einer automatischen Auswuchtung des Ausbohrwerkzeugs bei jedem eingestellten Durchmesser des Werkzeugträgers 4.

Die Anordnung von Werkzeugträger 4 einerseits und Verbindungselement 12 andererseits auf dem Schraubelement 15 mit Doppelgewinde ist in Figur 2 gezeigt, die einen Schnitt in Querrichtung durch das Ausbohrwerkzeug 1 entlang der Linie B-B in Figur 1 zeigt. In Figur 2 ist zu erkennen, daß das Ausbohrwerkzeug einen im wesentlichen kreisförmigen Querschnitt aufweist. Weiterhin ist in Figur 2 die Linie A-A eingezeichnet, die den Schnittverlauf von Figur 1 anzeigt.

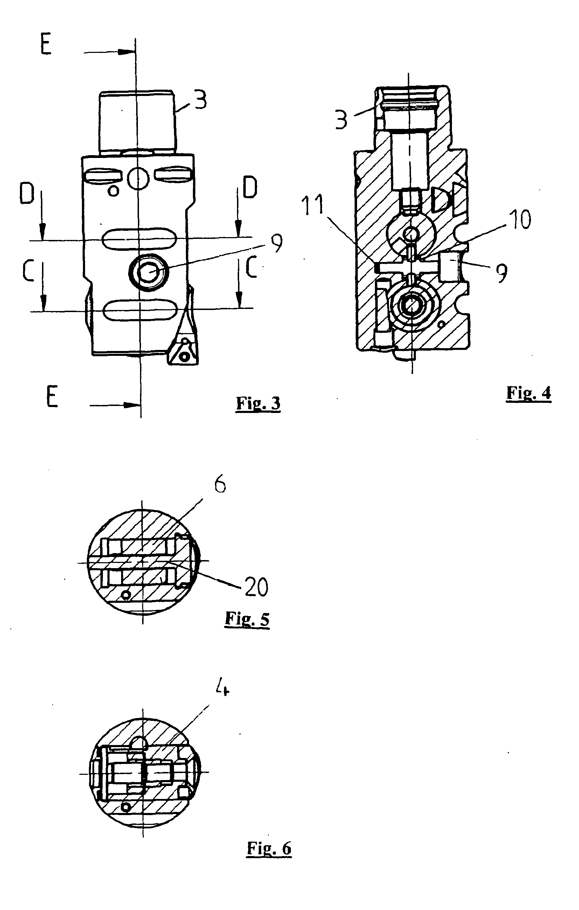

In Figur 3 ist eine Draufsicht auf die erste Ausführungsform des erfindungsgemäßen Ausbohrwerkzeugs 1 gezeigt. Figur 4 zeigt eine Schnittansicht entlang der Linie E-E von Figur 3. Figur 4 zeigt einen Schnitt senkrecht zu der in Figur 1 gezeigten Schnittansicht.

Figur 5 ist eine Schnittansicht entlang der Linie D-D von Figur 3, während Figur 6 eine Schnittansicht entlang der Linie C-C von Figur 3 ist.

In den Figuren 1 und 4 ist besonders gut zu erkennen, daß eine Klemmschraube 9 vorgesehen ist, die in eine Gewindebohrung 11 im Werkzeuggrundkörper 2 eingreift. Wird die Klemmschraube 9 festgezogen, so führt dies zu einer elastischen Verformung des gesamten Werkzeuggrundkörpers, so daß sowohl Gegengewicht 6 als auch Werkzeugträger 4 in ihren jeweiligen Bohrungen 7 und 8 festgeklemmt werden. Dadurch ist gewährleistet, daß es während des bearbeitenden Betriebs des Ausbohrwerkzeugs zu keinerlei unbeabsichtigter Bewegung von Gegengewicht 6 und/oder Werkzeugträger 4 kommt.

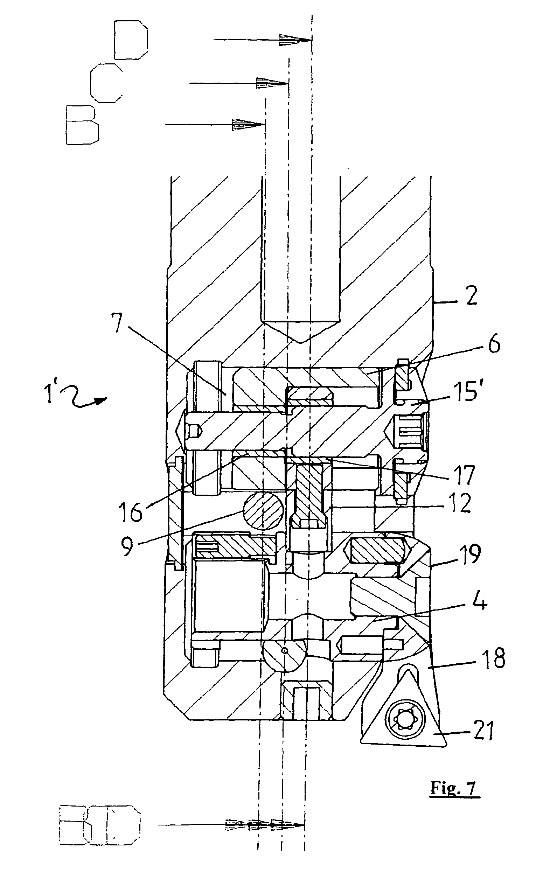

In Figur 7 ist eine Längsquerschnittsansicht einer zweiten Ausführungsform des erfindungsgemäßen Ausbohrwerkzeugs 1' gezeigt. Soweit möglich, wurden dieselben Bezugszahlen wie in den Figuren 1-6 verwendet, um identische Elemente beider Ausführungsformen zu kennzeichnen.

Die folgende Beschreibung der zweiten Ausführungsform beschränkt sich im wesentlichen auf die Unterschiede zwischen den beiden Ausführungsformen. Hinsichtlich der Anordnung und Funktionsweise der Elemente, die beiden Ausführungsformen gemein ist, wird auf die Beschreibung in Bezug auf die Figuren 1-6 verwiesen.

Zu erkennen in Figur 7 ist der Werkzeuggrundkörper 2. Der Werkzeuggrundkörper 2 weist zwei im wesentlichen parallel zueinander verlaufende Sackbohrungen 7 und 8 auf. In der Sackbohrung 8 ist der Werkzeugträger 4 angeordnet, an dem mit Hilfe der Schraube 19 ein Schneidplattenhalter 18 befestigt ist, der die Schneidplatte 21 in einem dafür vorgesehenen Schneidplattensitz 5 hält.

In der anderen Sackbohrung 7 ist ein Gegengewicht 6 angeordnet. Das Gegengewicht 6 weist eine Durchgangsgewindebohrung auf, in die das Schraubelement 15' eingreift. Das Schraubelement 15' hat zwei unterschiedliche Gewinde 16 und 17. Das Gegengewicht 6 tritt mit dem Gewindeabschnitt 16 in Eingriff. Mit dem Gewindeabschnitt 17 tritt ein Verbindungselement 12 in Eingriff, das gleichzeitig mit dem Werkzeugträger 4 verbunden ist.

Wird nun das Schraubelement 15' gedreht, so führt dies dazu, daß sich einerseits aufgrund der Verbindung zwischen Schraubelement 15' und Gegengewicht 6 über den Gewindegang 16 das Gegengewicht 6 in die eine Richtung bewegt, während aufgrund der Verbindung zwischen Verbindungselement 12 und Schraubelement 15' über den anderen Gewindegang 17 sich das mit dem Verbindungselement 12 verbundene Werkzeugträgerteil 4 in die andere Richtung bewegt. Durch Drehen der Schraube 15' ist es somit möglich, den Werkzeugträger 4 und damit die Schneidplatte 21 in radialer Richtung zu verstellen. Gleichzeitig sorgt die Gegenbewegung des Gegengewichts 6 dafür, daß das Ausbohrwerkzeug 1' insgesamt immer ausgewuchtet bleibt.

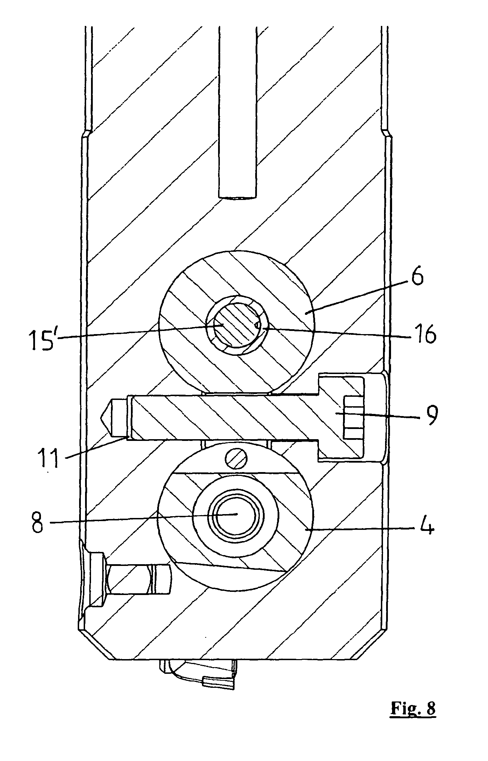

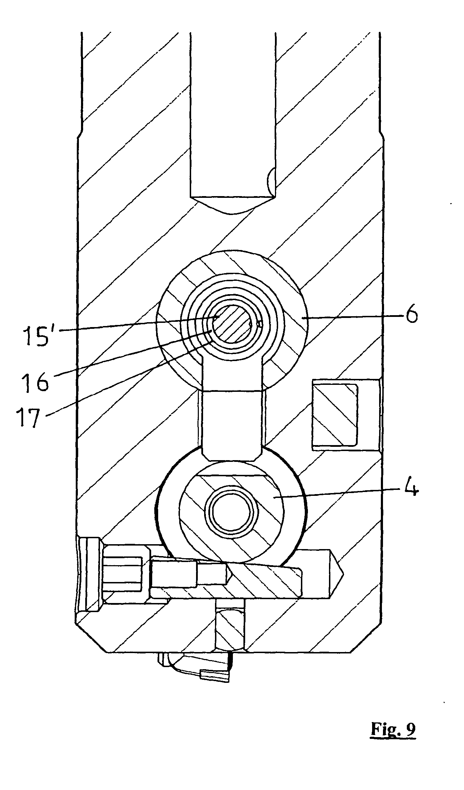

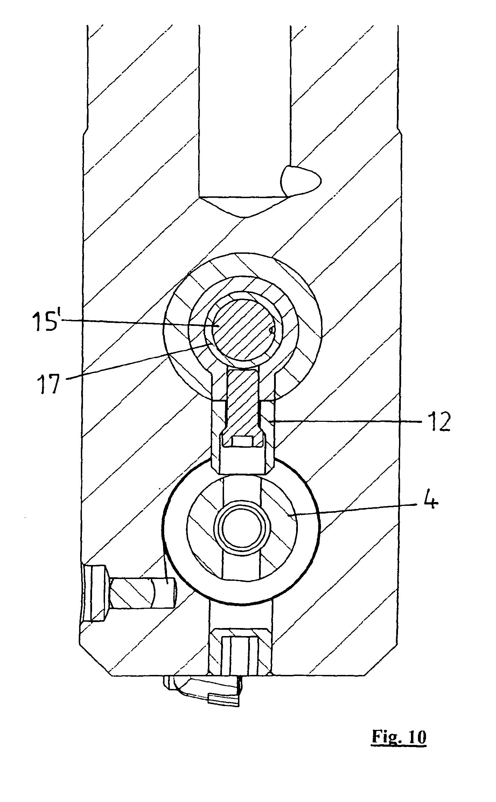

Die Figuren 8-10 zeigen Schnitte entlang der Linien B-B, C-C bzw. D-D.

Insbesondere in Figur 8 ist zu erkennen, daß ähnlich wie bei der ersten Ausführungsform eine Klemmschraube 9 vorgesehen ist, die in eine entsprechende Gewindebohrung 11 im Werkzeuggrundkörper 2 eingreift. Wird die Klemmschraube 9 angezogen, so führt dies aufgrund einer geschlitzten Ausführung des Werkzeuggrundkörpers 2 zu dessen elastischer Verformung, was zur Folge hat, daß Werkzeugträger 4 einerseits und Gegengewicht 6 andererseits in den Bohrungen 7 und 8 verspannt werden. Deutlich zu erkennen ist, daß die Klemmeinrichtung 9 weder Werkzeugträger 4 noch Gegengewicht 6 direkt berührt. Dadurch ist sichergestellt, daß die Klemmkraft auf beide beweglichen Teile, den Werkzeugträger 4 und das Gegengewicht 6, wirkt.

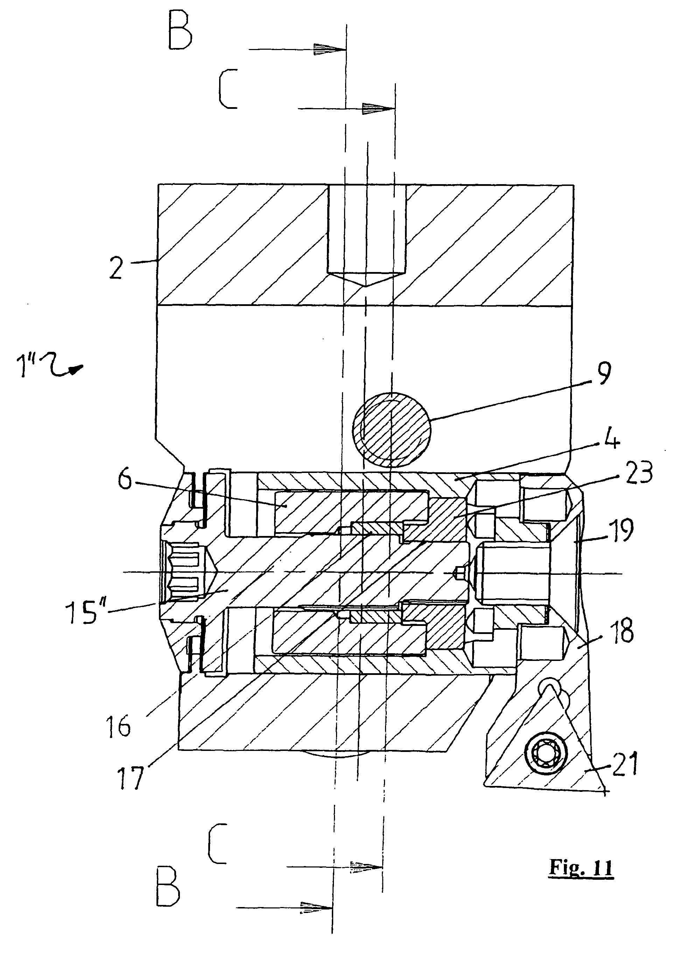

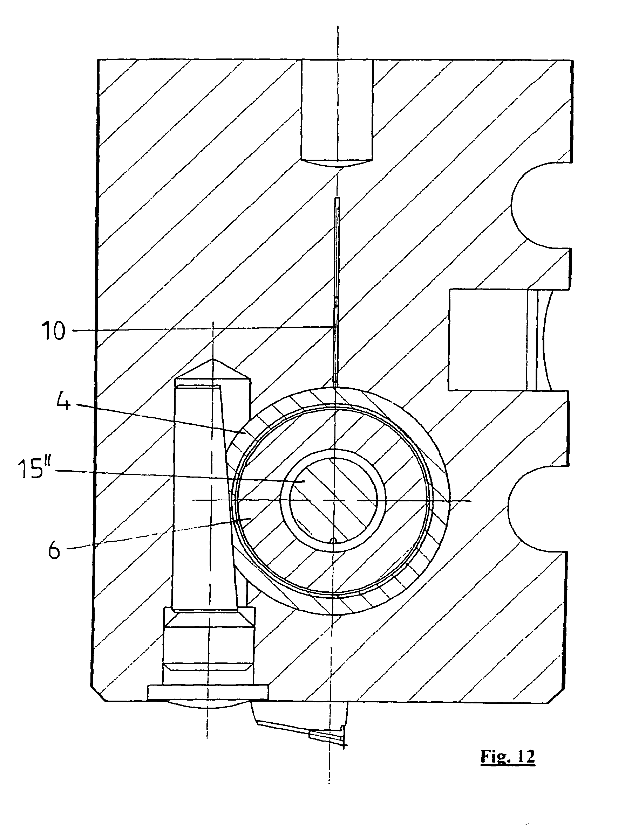

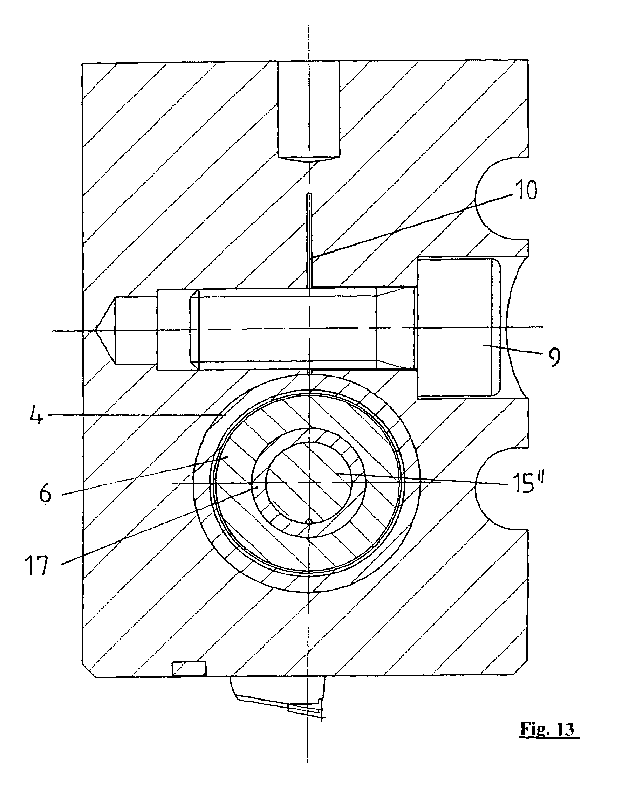

In Figur 11 ist eine Längsschnittansicht einer dritten Ausführungsform des erfindungsgemäßen Ausbohrwerkzeugs gezeigt. Weiterhin sind Schnittlinien B-B bzw. C-C eingezeichnet, die die Schnittansichten gemäß der Figuren 12 bzw. 13 anzeigen.

Es wurden, soweit möglich, gleiche Bezugszahlen verwendet, um gleiche Elemente, die allen Ausführungsformen gemein sind, zu kennzeichnen. Die folgende Beschreibung der dritten Ausführungsform konzentriert sich hauptsächlich auf die Unterschiede zwischen der dritten Ausführungsform und der vorher beschriebenen ersten und zweiten Ausführungsform. Hinsichtlich der Funktion der Merkmale, die allen Ausführungsformen gemein sind, wird auf die Beschreibung in Bezug auf die vorherigen Ausführungsformen verwiesen.

Das in Figur 11 gezeigte Ausbohrwerkzeug 1" weist einen Werkzeuggrundkörper 2 auf. In den Werkzeuggrundkörper 2 ist eine Bohrung eingebracht, in der sowohl Werkzeugträger 4 als auch Gegengewicht 6 auf dem Schraubelement 15" eingesetzt sind. Erneut hat das Schraubelement 15" zwei gegenläufige Gewinde, so daß beim Drehen des Schraubelements 15" beispielsweise eine Verschiebung des Werkzeugträgers 4 samt dem mit Hilfe der Schraube 19 an dem Werkzeugträger 4 befestigten Schneidplattenhalter 18, in dem die Schneidplatte 21 sitzt, in radialer Richtung nach außen, d.h. in Figur 11 nach rechts erfolgt, während das Gegengewicht 6 in Figur 11 nach links bewegt wird, so daß jederzeit das Ausbohrwerkzeug ausgewuchtet ist.

Die Anordnung von Gegengewicht 6 und Werkzeugträger 4 auf einer Achse hat verschiedene Vorteile. Zum einen muß dadurch nur eine entsprechende Bohrung im Werkzeuggrundkörper 2 vorgesehen werden, was zu einer höheren Stabilität des Ausbohrwerkzeugs 1" führt. Zum anderen kann das Ausbohrwerkzeug 1" deutlich kompakter ausgeführt werden.

Darüber hinaus wird durch die Anordnung von Gegengewicht 6 und Werkzeugträger 4 auf einer Achse sichergestellt, daß die Kraftmomente im Werkzeug reduziert werden.

In der gezeigten Ausführungsform ist das Gegengewicht 6 aus einem Material gefertigt, welches eine höhere Dichte hat als das Material, aus dem der Werkzeugträger 4 gefertigt ist. Da im allgemeinen der Werkzeugträger 4 samt Schneidplattenhalter 18 und Schneidplatte 21 vergleichsweise große Abmessungen hat, kann durch die Wahl eines Materials höherer Dichte für das Gegengewicht 6 dieses kleiner dimensioniert werden, was ebenfalls zu einer kompakteren Bauweise des Ausbohrwerkzeugs 1" führt.

In Figur 11 ist das Klemmelement 9 gezeigt. Wie in den Figuren 12 und 13 zu erkennen ist, ist auch hier der Werkzeuggrundkörper 2 mit einem Schlitz 10 versehen, so daß beim Festziehen der Klemmschraube 9 der Werkzeuggrundkörper elastisch verformt wird und Gegengewicht und gegebenenfalls auch Werkzeugträger in dem Werkzeuggrundkörper 2 verspannt werden. Die Klemmschraube 9 tritt auch in dieser Ausführungsform nicht direkt mit Gegengewicht 6 oder Werkzeugträger 4 in Eingriff.

Weiterhin besteht grundsätzlich die Möglichkeit, verschiedene Werkzeugträger 4 und/oder Schneidplattenhalter 18 zur Verfügung zu stellen, die zwar jeweils das gleiche Gewicht haben, jedoch in der Anordnung anders ausgebildet sind, so daß der mögliche einstellbare Radius der Schneidplatte 21 vergrößert wird.

### Bezugszeichenliste

- 1,1',1": Ausbohrwerkzeug
- 2: Werkzeuggrundkörper
- 3: Schaft
- 4: Werkzeugträger
- 5: Schneidplattensitz
- 6: Gegengewicht
- 7,8: Bohrung
- 9: Klemmeinrichtung
- 10: Schlitz
- 11: Gewindebohrung
- 12: Verbindungselement
- 13: Führungsstift
- 14: Führungsnut
- 15,15',15": Schraubelement
- 16,17: Gewindegang
- 18: Schneidplattenhalter
- 19: Schneidplattenhalterklemmschraube
- 20: Führungsbolzen
- 21: Schneidplatte
- 22: Abdeckung
- 23: Buchse

## Patentansprüche

1. Ausbohrwerkzeug (1) mit einem Werkzeuggrundkörper (2) und einem relativ zu diesem einstellbaren Werkzeugträger (4) sowie einem Gegengewicht (6), das mit dem Werkzeugträger (4) derart gekoppelt ist, daß bei einer Bewegung des Werkzeugträgers (4) in eine Richtung eine Bewegung des Gegengewichts (6) im wesentlichen in die entgegengesetzte Richtung erfolgt, wobei sowohl Werkzeugträger (4) als auch Gegengewicht (6) jeweils zumindest teilweise in einer Bohrung (7, 8) im Werkzeuggrundkörper angeordnet sind, **dadurch gekennzeichnet, daß** der Werkzeuggrundkörper (2) eine Klemmeinrichtung (9) aufweist, mit deren Hilfe der Werkzeuggrundkörper (2) elastisch verformt werden kann, so daß sowohl Werkzeugträger (4) als auch Gegengewicht (6) jeweils in der Bohrung (7, 8) eingeklemmt werden.

2. Ausbohrwerkzeug nach Anspruch 1, **dadurch gekennzeichnet, daß** der Werkzeuggrundträger (2) einen Schlitz (10) aufweist und mit Hilfe der Klemmeinrichtung (9) der Werkzeuggrundkörper (2) derart elastisch verformt werden kann, daß der Schlitz (10) schmaler wird.

3. Ausbohrwerkzeug nach Anspruch 1 oder 2, **dadurch gekennzeichnet, daß** die Klemmeinrichtung (9) aus einer Klemmschraube (9) besteht, die in eine Gewindebohrung (11) im Werkzeuggrundkörper (2) eingreift.

4. Ausbohrwerkzeug nach einem der Ansprüche 1 bis 3, **dadurch gekennzeichnet, daß** die Klemmeinrichtung (9) weder mit dem Werkzeugträger (4) noch mit dem Gegengewicht (6) in direktem Kontakt steht.

5. Ausbohrwerkzeug nach einem der Ansprüche 1 bis 4, **dadurch gekennzeichnet, daß** Werkzeugträger (4) und Gegengewicht (6) in zwei getrennten, vorzugsweise im wesentlichen parallei zueinander verlaufenden Bohrungen (7, 8) im Werkzeuggrundkörper angeordnet sind.

6. Ausbohrwerkzeug nach einem der Ansprüche 1 bis 4, **dadurch gekennzeichnet, daß** Werkzeugträger (4) und Gegengewicht (6) in derselben Bohrung im Werkzeuggrundkörper angeordnet sind.

7. Ausbohrvverkzeug nach Anspruch 5, **dadurch gekennzeichnet, daß** Werkzeugträger und Gegengewicht über ein Verbindungselement (12) miteinander verbunden sind.

8. Ausbohrwerkzeug nach Anspruch 7 soweit von Anspruch 2 abhängig, **dadurch gekennzeichnet, daß** das Verbindungselement (12) zumindest teilweise in dem Schlitz (10) angeordnet ist.

9. Ausbohrwerkzeug nach einem der Ansprüche 1 bis 8, **dadurch gekennzeichnet, daß** eine Führung (13, 14) zum Führen des Gegengewichts (6) in der Bohrung vorgesehen ist.

10. Ausbohrwerkzeug nach Anspruch 9, **dadurch gekennzeichnet, daß** die Führung (13, 14) aus einer Führungsausnehmung (14) und einem Führungsvorsprung (13), vorzugsweise aus einer Führungsnut (14) und einem Führungsstift (15) besteht, wobei die Führungsausnehmung (14) an einem der Elemente, Gegengewicht (6) oder Werkzeuggrundkörper (2), vorzugsweise am Gegengewicht (6), vorgesehen ist und der Führungsvorsprung (13) an dem anderen Element angeordnet ist.

11. Ausbohrwertczeug nach Anspruch 9 oder 10, **dadurch gekennzeichnet, daß** die Führung aus einem Führungsbolzen (20) besteht, der innerhalb einer Bohrung in dem Gegengewicht (6) angeordnet ist.

12. Ausbohrwerkzeug nach einem der Ansprüche 1 bis 11, **dadurch gekennzeichnet, daß** zur Bewegung des Werkzeugträgers (4) ein Schraubelement (15) mit zwei Gewinden (16, 17) vorgesehen ist, wobei das eine Gewinde (17) mit dem Werkzeugträger (4) und das andere Gewinde (16) mit dem Gegengewicht (6) in Eingriff steht.

13. Ausbohniverkzeug nach einem der Ansprüche 7 bis 12 soweit von Anspruch 7 oder 8 abhängig, **dadurch gekennzeichnet, daß** zur Bewegung des Werkzeugträgers (4) ein Schraubelement (15) mit zwei Gewinden (16, 17) vorgesehen ist, wobei das eine Gewinde mit dem Werkzeugträger (4) und das andere Gewinde mit dem Verbindungselement (12) in Eingriff steht.

14. Ausbohrwerkzeug nach einem der Ansprüche 7 bis 12 soweit von Anspruch 7 oder 8 abhängig, **dadurch gekennzeichnet, daß** zur Bewegung des Werkzeugträgers (4) ein Schraubelement (15) mit zwei Gewinden (16, 17) vorgesehen ist, wobei das eine Gewinde mit dem Verbindungselement (12) und das andere Gewinde mit dem Gegengewicht (6) in Eingriff steht.

15. Ausbohrwerkzeuge nach einem der Ansprüche 1 bis 14, **dadurch gekennzeichnet, daß** Werkzeugträger (4) und Gegengewicht (6) aus Materialien unterschiedlicher Dichte bestehen, wobei vorzugsweise das Material des Gegengewichts (6) eine höhere Dichte hat als das Material des Werkzeugträgers (4).

## Claims

1. Drilling tool (1) with a basic tool body (2) and a tool holder (4) relatively adjustable to the basic tool body as well as a counterweight (6), which is coupled to the tool holder (4) in such a way that when moving the tool holder (4) in a direction the counterweight (6) is moved basically in the opposite direction, wherein the tool holder (4) as well as the counterweight (6) are each at least partially arranged in a borehole (7, 8) in the basic tool body, **characterized in that** the basic tool body (2) comprises a clamping device (9), with the help of which the basic tool body (2) can be elastically deformed so that the tool holder (4) as well as the counterweight (6) are each clamped in the borehole (7, 8).

2. Drilling tool according to claim 1, **characterized in that** the basic tool body (2) comprises a slot (10) and the basic tool body (2) can be elastically deformed with the help of the clamping device (9) in such a way that the slot (10) gets narrower.

3. Drilling tool according to claim 1 or 2, **characterized in that** the clamping device (9) consists of a clamping screw (9) which engages into a threaded bore (11) in the basic tool body (2).

4. Drilling tool according to claim 1 to 3, **characterized in that** the clamping device (9) is not in direct contact neither with the tool holder (4) nor with the counterweight (6).

5. Drilling tool according to claim 1 to 4, **characterized in that** the tool holder (4) and the counterweight (6) are arranged in the basic tool body in two separate, preferably basically parallel to each other boreholes (7, 8).

6. Drilling tool according to claim 1 to 4, **characterized in that** the tool holder (4) and the counterweight (6) are arranged in the same borehole in the basic tool body.

7. Drilling tool according to claim 5, **characterized in that** the tool holder and the counterweight are connected with each other over a connecting element (12).

8. Drilling tool according to claim 7, in as far as depending on claim 2, **characterized in that** the connecting element (12) is at least partially arranged in the slot (10).

9. Drilling tool according to claim 1 to 8, **characterized in that** a guidance (13, 14) is provided for guiding the counterweight (6) in the borehole.

10. Drilling tool according to claim 9, **characterized in that** the guidance (13, 14) consist of a guiding recess (14) and a guiding protrusion (13), preferably of a guiding groove (14) and a guiding pin (15), wherein the guiding recess (14) is provided on one of the elements, counterweight (6) or basic tool body (2), preferably on the counterweight (6), and the guiding protrusion (13) is arranged on the other element.

11. Drilling tool according to claim 9 or 10, **characterized in that** the guidance consists of a guide bolt (20) which is arranged within a borehole in the counterweight (6).

12. Drilling tool according to claim 1 to 11, **characterized in that** for moving the tool holder (4) a threaded element (15) with two threads (16, 17) is provided, wherein the one thread (17) engages the tool holder (4) and the other thread (16) engages the counterweight (6).

13. Drilling tool according to claim 7 to 12, in as far as depending on claim 7 or 8, **characterized in that** for moving the tool holder (4) a threaded element (15) with two threads (16, 17) is provided, wherein the one thread (17) engages the tool holder (4) and the other thread engages the connecting element (12).

14. Drilling tool according to claim 7 to 12, in as far as depending on claim 7 or 8, **characterized in that** for moving the tool holder (4) a threaded element (15) with two threads (16, 17) is provided, wherein the one thread (17) engages the connecting element (12) and the other thread engages the counterweight (6).

15. Drilling tool according to claim 1 to 14, **characterized in that** the tool holder (4) and the counterweight (6) consist of materials of different thickness, wherein the material of the counterweight (6) preferably has a higher thickness than the material of the tool holder (4).

## Revendications

1. Outil d'alésage (1) comprenant un corps de base (2), un porte-outil (4) qui peut être réglé par rapport au corps de base, et un contrepoids (6) qui est couplé au porte-outil (4) de sorte que, lors d'un mouvement du porte-outil (4) dans un sens, le contrepoids (6) effectue un mouvement de sens sensiblement opposé, le porte-outil (4) et le contrepoids (6) étant tous deux disposés respectivement au moins partiellement dans un orifice (7, 8) pratiqué dans le corps de base de l'outil, **caractérisé en ce que** le corps de base (2) de l'outil présente un mécanisme de serrage (9) à l'aide duquel le corps de base (2) de l'outil peut être déformé élastiquement de sorte que le porte-outil (4) et le contrepoids (6) sont tous deux enserrés respectivement dans l'orifice (7, 8).

2. Outil d'alésage selon la revendication 1, **caractérisé en ce que** le corps de base (2) de l'outil présente une fente (10) et le corps de base (2) de l'outil peut être déformé élastiquement à l'aide du mécanisme de serrage (9), de sorte que la fente (10) devient plus mince.

3. Outil d'alésage selon la revendication 1 ou 2, **caractérisé en ce que** le mécanisme de serrage (9) se compose d'une vis de serrage (9), qui s'engrène dans un trou taraudé (11) dans le corps de base (2) de l'outil.

4. Outil d'alésage selon l'une des revendications 1 à 3, **caractérisé en ce que** le mécanisme de serrage (9) n'entre en contact direct ni avec le porte-outil (4), ni avec le contrepoids (6).

5. Outil d'alésage selon l'une des revendications 1 à 4, **caractérisé en ce que** le porte-outil (4) et le contrepoids (6) sont disposés dans deux orifices (7, 8) séparés, de préférence sensiblement parallèles l'un par rapport à l'autre et pratiqués dans le corps de base.

6. Outil d'alésage selon l'une des revendications 1 à 4, **caractérisé en ce que** le porte-outil (4) et le contrepoids (6) sont disposés dans le même orifice pratiqué dans le corps de base.

7. Outil d'alésage selon la revendication 5, **caractérisé en ce que** le porte-outil et le contrepoids sont reliés entre eux via un élément de liaison (12).

8. Outil d'alésage selon la revendication 7, si elle est dépendante de la revendication 2, **caractérisé en ce que** l'élément de liaison (12) est disposé au moins partiellement dans la fente (10).

9. Outil d'alésage selon l'une des revendications 1 à 8, **caractérisé en ce qu'**un élément de guidage (13, 14) destiné à guider le contrepoids (6) dans l'orifice est prévu.

10. Outil d'alésage selon la revendication 9, **caractérisé en ce que** l'élément de guidage (13, 14) comporte un évidemment de guidage (14) et une saillie de guidage (13), de préférence une rainure de guidage (14) et une tige de guidage (15), l'évidemment de guidage (14) étant prévu sur un des éléments, contrepoids (6) ou corps de base (2), de préférence sur le contrepoids (6), et la saillie de guidage (13) étant disposée sur l'autre élément.

11. Outil d'alésage selon la revendication 9 ou 10, **caractérisé en ce que** l'élément de guidage se compose d'une broche de guidage (20) disposée à l'intérieur d'un orifice dans le contrepoids (6).

12. Outil d'alésage selon l'une des revendications 1 à 11, **caractérisé en ce qu'**un élément fileté (15) avec deux filetages (16, 17) est prévu pour le mouvement du porte-outil (4), l'un des filetages (17) étant engrené avec le porte-outil (4) et l'autre filetage (16) avec le contrepoids (6).

13. Outil d'alésage selon l'une des revendications 7 à 12, si elle est dépendante de la revendication 7 ou 8, **caractérisé en ce qu'**un élément fileté (15) avec deux filetages (16, 17) est prévu pour le mouvement du porte-outil (4), l'un des filetages étant engrené avec le porte-outil (4) et l'autre filetage avec l'élément de liaison (12).

14. Outil d'alésage selon l'une des revendications 7 à 12, si elle est dépendante de la revendication 7 ou 8, **caractérisé en ce qu'**un élément fileté (15) avec deux filetages (16, 17) est prévu pour le mouvement du porte-outil (4), l'un des filetages étant engrené avec l'élément de liaison (12) et l'autre filetage avec le contrepoids (6).

15. Outil d'alésage selon l'une des revendications 1 à 14, **caractérisé en ce que** le porte-outil (4) et le contrepoids (6) se composent de matériaux de densités différentes, le matériau du contrepoids (6) ayant de préférence une densité plus élevée que le matériau du porte-outil (4).
